(19) Europäisches Patentamt
European Patent Office
Office européen des brevets

(11) **EP 0 425 676 B1**

(12) **EUROPEAN PATENT SPECIFICATION**

(45) Date of publication and mention
of the grant of the patent:
**01.05.1996 Bulletin 1996/18**

(21) Application number: **90901887.1**

(22) Date of filing: **17.01.1990**

(51) Int Cl.[6]: **G05B 19/42**

(86) International application number:
**PCT/JP90/00055**

(87) International publication number:
**WO 90/08624 (09.08.1990 Gazette 1990/19)**

(54) **DIGITIZING METHOD**

DIGITALISIERUNGSVERFAHREN

PROCEDE DE NUMERISATION

(84) Designated Contracting States:
**DE FR GB IT**

(30) Priority: **03.02.1989 JP 26437/89**

(43) Date of publication of application:
**08.05.1991 Bulletin 1991/19**

(73) Proprietor: **FANUC LTD.**
**Minamitsuru-gun, Yamanashi 401-05 (JP)**

(72) Inventors:
• **MATSUURA, Hitoshi**
**Keio Yamada Mansion 1-406**
**Tokyo 193 (JP)**
• **ARAMAKI, Hitoshi**
**Tokyo 191 (JP)**
• **NAKAJIMA, Osamu Fanuc Dai-3 Bira-karamatsu**
**Yamanashi 401-05 (JP)**

(74) Representative: **Brunner, Michael John et al**
**GILL JENNINGS & EVERY**
**Broadgate House**
**7 Eldon Street**
**London EC2M 7LH (GB)**

(56) References cited:
JP-A- 6 274 555      JP-A-62 176 729
JP-A-63 148 308

## Description

## TECHNICAL FIELD

The present invention relates to a digitizing method by which positional data are sequentially fetched while profiling the configuration of a model, and more specifically, to a digitizing method capable of creating NC data by which the flagging of a corner is reduced.

## BACKGROUND ART

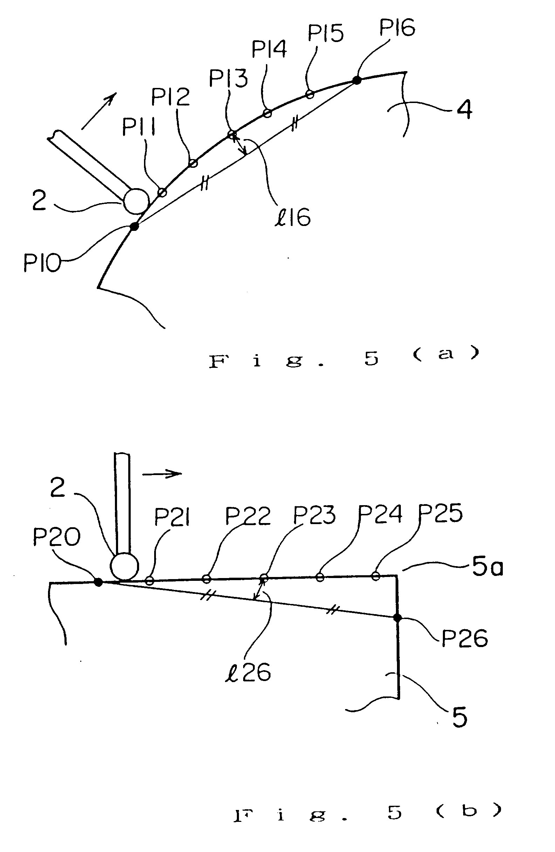

Figure 5(a) is a diagram explaining a conventional digitizing method, wherein a stylus 2 is moved along a model 4 and respective points P11, P12, ..... are sequentially sampled from a previous output point P10 at predetermined intervals. Therefore, the distance from the middle point of a straight line, connecting the previous output point P10 and a present sampling point, to an intermediate point among the sampling points sampled up to this time is determined, and when this distance exceeds a preset tolerance value, the sampling point is designated as an output point.

In the figure, the distance $\ell16$, which is determined when sampling has been executed up to a sampling point P16, satisfies this condition, and thus P16 is designated as an output point and NC data approximating a straight line between the output points P10 and P16 is output.

Nevertheless, the conventional method has a drawback in that the change of a configuration is determined by the middle point among the sampling points.

Figure 5(b) is a diagram showing a case in which digitizing is executed by profiling a model 5 having a corner 5a, wherein a stylus 2 is moved along the model 5 and respective points P21, P22, ... are sequentially sampled at predetermined intervals from a previous output point P20.

As can be seen from the figure, the distances determined by the above method with respect to sampling points P21 to P25 located in front of the corner 5a are zero and thus they are not designated as an output point. Instead, a sampling point P26 located after the corner 5a and having a distance $\ell26$ exceeding the tolerance amount is first designated as an output point, and as a result, NC data is created based on the straight line connecting the output points P20 and P26, which causes a flagging of the corner.

## DISCLOSURE OF THE INVENTION

Taking the above into consideration, an object of the present invention is to provide a digitizing method capable of creating NC data by which the flagging of a corner can be reduced.

JP-A-6314830 discloses a tracing apparatus with sharp edge detection.

To solve the above problem, in accordance with the present invention, there is provided a method for digitising the surface of a model using a profiling stylus and for outputting NC data, the method including the steps of:

sequentially fetching positional data according to a predetermined method;
sensing an amount of displacement on each axis applied to said stylus by a tracer head and determining an amount of displacement therefrom; and
profiling said surface while controlling the stylus in such a manner that it is attempted to make the amount of displacement equal to a reference amount of displacement; characterised by the steps of:
monitoring a difference between said amount of displacement and said reference amount of displacement; and
outputting, in addition to the positional data obtained by said predetermined method, specific positional data obtained when said difference exceeds a predetermined value;
setting said amount of displacement as a reference amount of displacement; and
restarting displacement amount sensing.

Although the amount of displacement of each axis is made equal to the reference amount of displacement when a gently inclined configuration is profiled, when a corner is reached the stylus 2 is spaced from a model, and accordingly, the difference between the amount of displacement and the reference amount of displacement is increased. This change is sensed and considered to show the corner, and thus the difference is added to the output point obtained by a usual digitising and the positional data at that time is output.

IN THE DRAWINGS:-

Figure 1 is a conceptual view of a digitizing method of an enbodiment according to the present invention;
Figure 2 is a graph showing a difference between a composite amount of displacement and a reference amount of displacement which occurs over time.
Figure 3 is a flowchart showing the processes for machining a corner executed by the digitizing method of the embodiment according to the present invention;
Figure 4 is a block diagram of hardware embodying the present invention;
Figure 5(a) is a diagram explaining a conventional digitizing method; and
Figure 5(b) is a diagram explaining a case in which a corner is digitized by the conventional digitizing method.

An embodiment of the present invention will be described below with reference to the drawings.

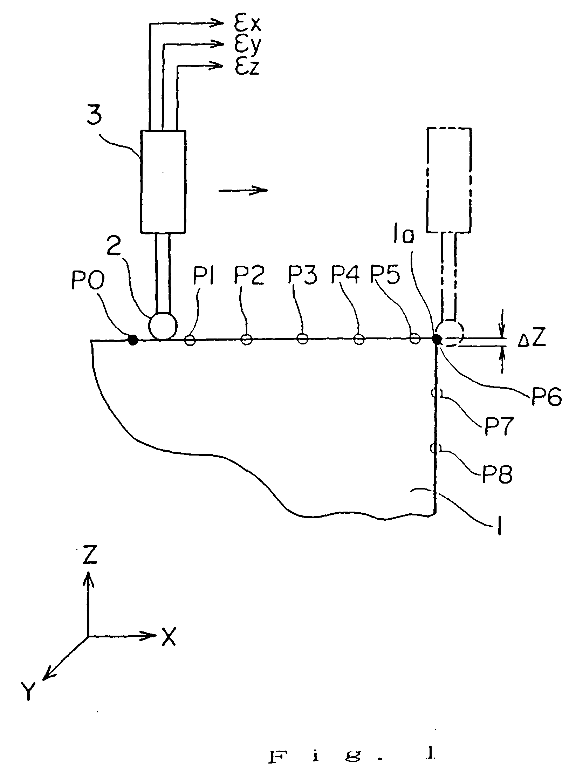

Figure 1 is a conceptual view of a digitizing method of the embodiment according to the present invention. Although profiling is carried out on the X-axis direction in Figure 1, it can be carried out in any directions in the X-Y plane. In Figure 1, a stylus 2 is moved in the X-axis direction at a predetermined profiling speed and moved upward and downward also in the Z-axis direction along the configuration of a model 1, and the amounts of displacement of the respective axes $\varepsilon x$, $\varepsilon y$, and $\varepsilon z$ are sensed by a tracer head 3. Namely, respective points P1, P2, ... are sequentially sampled from a previous output point P0 at predetermined intervals while controlling a profiling speed in such a manner that a composite amount of displacement $\varepsilon$ (where $\varepsilon = \sqrt{\varepsilon x2 + \varepsilon y2 + \varepsilon z2}$) is attempted to be made equal to a not shown reference amount of replacement $\varepsilon 0$.

A distance from the middle point of a straight line connecting the previous output point P0 and a present sampling point, to an intermediate point among the sampling points sampled up to this time, is determined, and when this distance exceeds a preset tolerance value, the sampling point is designated as an output point. As apparent from Figure 1, sampling points P1, P2, P3, P4 and P5 cannot serve as the output point.

When the corner 1a of the model 1 is profiled, the stylus 2 is abruptly moved in the negative direction of the Z-axis by an amount of $\Delta z$, and thus the composite amount of replacement $\varepsilon$ is instantaneously made smaller than the reference amount of displacement $\varepsilon 0$.

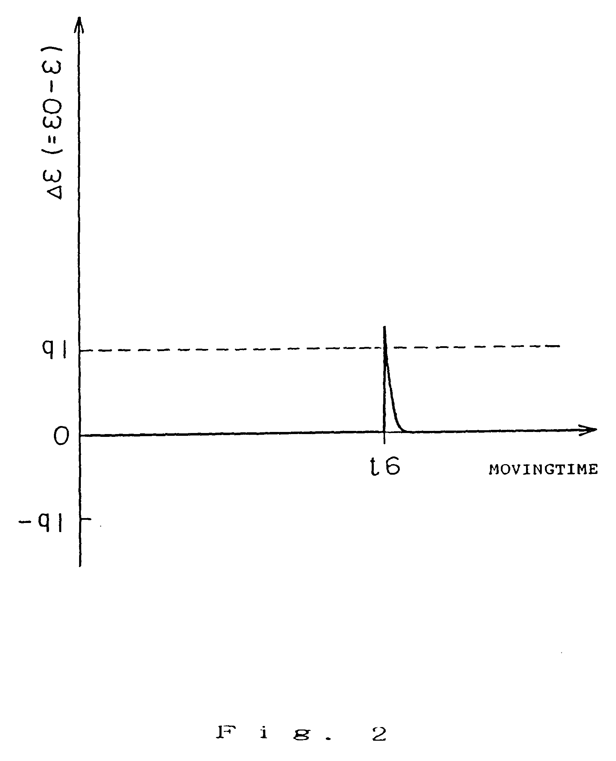

Figure 2 shows the change of the composite amount of replacement $\varepsilon$, wherein a vertical axis represents a difference $\Delta \varepsilon$ between the reference amount of displacement $\varepsilon 0$ and the composite amount of replacement $\varepsilon$, a horizontal axis represents a time during which the stylus 2 is moved, and t6 corresponds to a timing at which the stylus 2 reaches the corner 1a shown in Figure 1. The difference $\Delta \varepsilon$ is within the range of from q1 to -q1 in the gently inclining range of the model 1, but when the stylus 2 reaches the corner 1a, it exceeds q1. This state is sensed and the position of the stylus 2 at the time is fetched and designated as an output point.

Returning to Figure 1, a point P6 is designated as the output point next to the output point P0, and at the same tine, NC data to which a speed command suitable to the corner is added is output. Thereafter, points P7, P8, ... are sampled from the point P6 at predetermined intervals.

As a result, NC data approximating a straight line between the output points P0 and P6 is obtained and machining in the vicinity of the output point P6 is carried out at a feed speed for the corner, whereby the configuration of the corner 1a can be correctly reproduced.

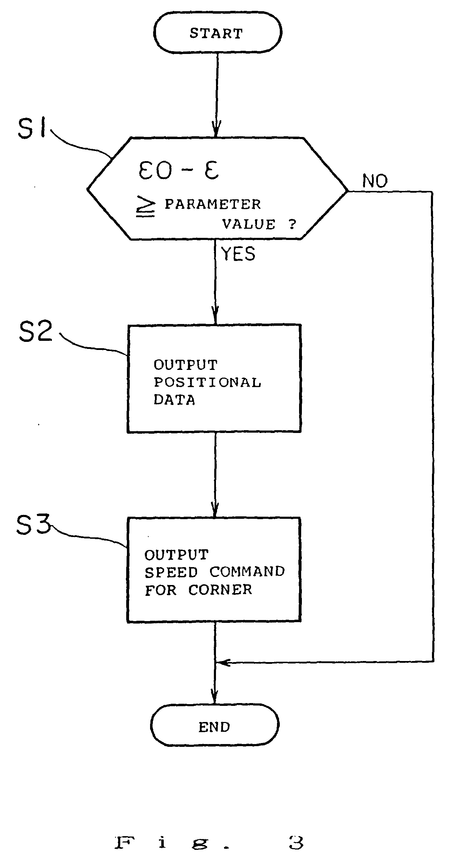

Figure 3 is a flowchart showing the processes for machining the corner when executed by the digitizing method of the embodiment according to the present invention, wherein numerals prefixed with an S indicate the numbers of the steps of these processes.

Whether or not a difference $\Delta \varepsilon$ between the reference amount of displacement $\varepsilon 0$ and a composite amount of displacement $\varepsilon$ exceeds a predetermined threshold value is determined at S1, and when the former exceeds the latter, the process goes to step S2, and when the former does not exceed the latter, digitizing is continuously carried out at predetermined sampling intervals. At step 2, positional data at the point is output, and a speed command for the corner is output at step S3.

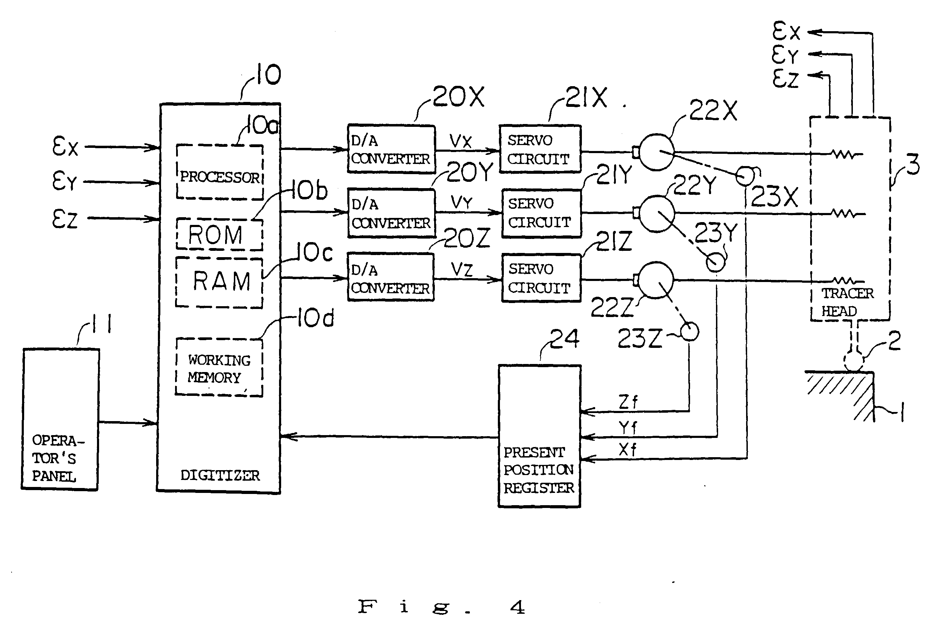

Figure 4 is a block diagram of hardware embodying the present invention, wherein a digitizer 10 comprises a processor 10a, a ROM 10b in which a control program is stored, a RAM 10c in which digitized positional data is stored, and a working memory 10d, by which the present position of a tracer head 3 is fetched and digitized while executing a profiling control.

An operator's panel 11 outputs various operation signals and functions to set profiling conditions, a profiling range and method, and the like.

D/A converters 20X, 20Y and 20Z convert digital speed data in the respective axial directions commanded by the digitizer 10 to analog speed signals Vx, Vy and Vz and output the same to servo circuits 21X, 21Y and 21Z. These servo circuits enable servomotors 22X, 22Y and 22Z, which when rotated by a predetermined angle, cause pulse generators 23X, 23Y and 23Z to generate pulse signals Xf, Yf and Zf. A present position register 24 reversibly calculates these respective pulse signals to store the present positions of the respective axes and input same to the digitizer 10.

Note that, although the present embodiment senses the corner by comparing the composite amount of displacement with the reference amount of displacement, the amount of displacement of a particular axis may be compared with the reference amount of displacement.

As described above, according to the present invention, since the difference between the amount of displacement of each axis and the reference amount of displacement is monitored, and when the difference exceeds a predetermined value a corner is be profiled and the positional data at that time is output in addition to the output point obtained by a usual digitizing, NC data capable of correctly reproducing the configuration of the corner can be provided.

Further, a speed command for the corner is added at the same time, and thus a configuration of the corner without flagging can be actually machined.

## Claims

1. A method for digitising the surface of a model (1) using a profiling stylus and for outputting NC data, the method including the steps of:

   sequentially fetching positional data according to a predetermined method;

sensing an amount of displacement on each axis applied to said stylus (2) by a tracer head (3) and determining an amount of displacement therefrom; and

profiling said surface while controlling the stylus in such a manner that it is attempted to make the amount of displacement equal to a reference amount of displacement; characterised by the steps of:

monitoring a difference between said amount of displacement and said reference amount of displacement; and

outputting, in addition to the positional data obtained by said predetermined method, specific positional data obtained when said difference exceeds a predetermined value;

setting said amount of displacement as a reference amount of displacement; and

restarting displacement amount sensing.

2. A digitising method according to claim 1, wherein a speed command suitable for machining a corner is output with the specific positional data.

**Patentansprüche**

1. Verfahren zum Digitalisieren der Oberfläche eines Modells (1) unter Verwendung einer Tastspitze und zum Ausgeben von NC Daten mit folgenden Schritten:

Positionsdaten gemäß einem bestimmten Verfahren werden nacheinander ausgegeben;

eine Verschiebungsgröße für jede Achse, die für die Tastspitze (2) vorgesehen ist, wird von einem Abtastkopf (3) erfaßt und hieraus eine Verschiebungsgröße bestimmt und die Oberfläche wird profiliert, während die Tastspitze derart gesteuert wird, daß versucht wird, die Verschiebungsgröße gleich einer Bezugsgröße der Verschiebung zu machen, gekennzeichnet durch die Schritte:

eine Differenz zwischen der Verschiebungsgröße und der Bezugsgröße der Verschiebung wird überwacht und zusätzlich zu den Positionsdaten, die man mit dem vorbestimmten Verfahren erhält, werden spezifische Positionsdaten ausgegeben, die man erhält, wenn die besagte Differenz einen bestimmten Wert überschreitet,

die Verschiebungsgröße wird als eine Bezugsgröße der Verschiebung eingesetzt und

das Abtasten der Verschiebungsgröße erfolgt erneut.

2. Digitalisierverfahren nach Anspruch 1, bei dem ein zum Bearbeiten einer Ecke passender Geschwindigkeitsbefehl zusammen mit den spezifischen Positionsdaten ausgegeben wird.

**Revendications**

1. Un procédé pour numériser la surface d'un modèle (1) en utilisant un palpeur de suivi de profil et pour délivrer des données de commande numérique, le procédé comprenant les opérations consistant à :

aller chercher de manière séquentielle des données de position selon un procédé prédéterminé ;

détecter une quantité de déplacement sur chaque axe appliqué audit palpeur (2) par une tête de suivi (3) et en déterminer une valeur de déplacement ; et

effectuer un suivi du profil de ladite surface tout en commandant le palpeur de telle manière qu'il soit recherché de rendre la valeur de déplacement égale à une valeur de déplacement de référence ; caractérisé par les opérations consistant à :

contrôler une différence entre ladite valeur de déplacement et ladite valeur de déplacement de référence ; et

délivrer, en plus des données de position obtenues par ledit procédé prédéterminé, des données de position spécifiques obtenues lorsque ladite différence dépasse une valeur prédéterminée ;

régler ladite valeur de déplacement comme étant une valeur de déplacement de référence ; et

redémarrer la détection d'une valeur de déplacement.

2. Un procédé de numérisation selon la revendication 1, dans lequel une instruction de vitesse appropriée pour usiner un coin est délivrée avec les données de position spécifiques.

$\varepsilon x$

$\varepsilon y$

$\varepsilon z$

F i g . 1

F i g . 2

S1

START

ε0 - ε ≥ PARAMETER VALUE ?

NO

YES

S2

OUTPUT POSITIONAL DATA

S3

OUTPUT SPEED COMMAND FOR CORNER

END

Fig. 3

Fig. 4

F i g . 5 ( a )

F i g . 5 ( b )